# EUROPEAN PATENT APPLICATION

(11) **EP 4 404 375 A1**
(43) Date of publication of application: **24.07.2024**
(21) Application number: 22870375.7
(22) Date of filing: 19.09.2022
(51) Int. Cl.: H01Q 1/24, F16C 11/04, H01Q 1/12, H01Q 1/08

(54) **ANTENNA APPARATUS FOR BASE STATION**

(30) Priority: 17.09.2021 KR 20210124816; 27.09.2021 KR 20210127507
(71) Applicant: KMW Inc., Hwaseong-si, Gyeonggi-do 18462 (KR)
(72) Inventor: KIM, Duk Yong, Yongin-si Gyeonggi-do 17086 (KR); JI, Kyo Sung, Hwaseong-si Gyeonggi-do 18484 (KR); RYU, Chi Back, Hwaseong-si Gyeonggi-do 18392 (KR); PARK, Won Jun, Yongin-si Gyeonggi-do 17134 (KR); KIM, In Ho, Yongin-si Gyeonggi-do 17073 (KR); KIM, Hee, Osan-si Gyeonggi-do 18131 (KR)
(74) Representative: SJW Patentanwälte
(86) International application number: PCT/KR2022/013973
(87) International publication number: WO 2023/043293

(57) **Abstract**

The present invention relates to an antenna apparatus for a base station and, specifically, to an antenna apparatus comprising: a repeater; an antenna module installed to be tiltable and steerable with respect to the front surface of the repeater; and an antenna clamping unit for mediating the installation of the antenna module with respect to the repeater, wherein the antenna clamping unit is provided to conceal a wire cable which electrically connects the repeater and the antenna module, thereby preventing deterioration of aesthetics of an installation place and maximizing space utilization.

## Description

### [Technical Field]

The present disclosure relates to an antenna apparatus for a base station, and more particularly, to an antenna apparatus for a base station, which includes a clamping unit that improves the beauty of the antenna apparatus by preventing the exposure of the appearance of a cable and that is also provided to enable a beam tilting operation of an antenna module itself.

### [Background Art]

In a mobile communication system, a "base station" refers to a system that relays radio waves of a portable terminal within a cell. The base station is basically installed at the rooftop of a building, etc. and relays radio waves of a portable terminal. Accordingly, the base station is present in a cell unit. Such a base station controls the transmission of incoming and outgoing signals, the designation of a communication channel, the monitoring of a communication channel, etc. in a cell unit in addition to an interface function between a portable terminal and a switching office. In an antenna apparatus that is adopted in the base station, a control antenna that is capable of beam tilting vertically or horizontally and that has many advantages has been supplied.

As a mobile communication service becomes popular, the supply of an antenna apparatus that provides a wireless network environment in which services can be provided more stably is expanded. In the mobile communication service, recently, the use of the 5G mobile communication technology via 3 generation (3G) and 4G from 2G that enables only a wired call tends to be expanded.

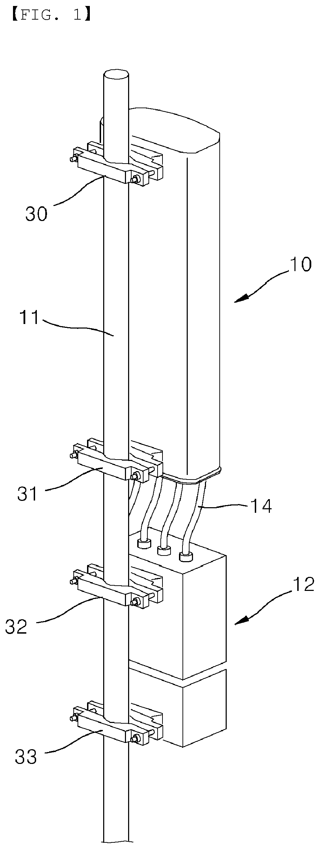

FIG. 1 is a perspective view of an appearance illustrating an antenna apparatus for a base station according to a conventional embodiment.

As illustrated in FIG. 1, the antenna apparatus for a base station according to the conventional embodiment has been installed in the outside (an outdoor place), and has a structure in which an antenna module 10 is mounted on a support pole 11 that stands upright by fixing brackets 30 and 31, a repeater 12 is mounted under the antenna module 10 by fixing brackets 32 and 33, and the antenna module 10 and the repeater 12 are electrically connected by using multiple cables 14. The fixing brackets 30 and 31 have a structure in which the fixing brackets are disposed at upper and lower parts of the antenna module 10, respectively, and are fixed to the support pole 11 and the fixing brackets are disposed at upper and lower parts of the repeater 12, respectively, and are fixed to the support pole 11. The fixing brackets 30 to 33 each play a part in fixing by using a fastener, for example, a screw, a bolt, or a nut.

However, the conventional antenna apparatus for a base station has a structure in which the conventional antenna apparatus is installed essentially through the medium of the support pole 11 and installed in the outside (an outdoor place), and has a structure in which the antenna module 10 is mounted on a relatively upper side of the support pole 11 and the repeater 12, for example, an RRH is mounted on a relatively lower side of the support pole 11 and then the antenna module and the repeater are connected by using the cables 14. Accordingly, the conventional antenna apparatus has a problem in that the conventional antenna apparatus degrades its beauty because the cable 14 is exposed to the outside.

The problem identically occurs although the conventional antenna apparatus is installed indoors (i.e., in-building), in particular, if the repeater 12 and the antenna module 10 have an electrical connection structure using the cables 14 as separation types although not illustrated. In the case of the in-building installation, there is a greater need to prevent the degradation of the beauty.

Recently, in order to prevent the problem that degrades the beauty irrespective of outdoor installation and indoor installation, although not illustrated, a structure in which the antenna module is coupled to a front part of the repeater and an electrical connection between the repeater and the antenna module is performed by using a method, such as a socket pin connection, not the cable connection is adopted.

However, even in this case, a structure in which the repeater is also tilted for the beam tilting of the antenna module needs to be adopted. This may result in a problem in that a space rental cost is increased because the structure occupies a large tilting space.

Furthermore, recently, an antenna apparatus for a base station, which is installed in an outdoor or indoor sidewalk where portable terminal users frequently move, tends to be designed by sufficiently considering an element that is compact so that the antenna apparatus occupies a small space as described above and that minimizes the degradation of the beauty.

### [DISCLOSURE]

### [Technical Problem]

The present disclosure has been contrived to solve the technical problems, and an object of the present disclosure is to provide an antenna apparatus for a base station, which can prevent the exposure of the appearance of a cable while having an electrical connection structure using the cable not a socket pin connection structure.

Furthermore, another object of the present disclosure is to provide an antenna apparatus for a base station, which includes an antenna clamping unit that enables the tilting of an antenna module solely even without a tilting operation of a repeater by maintaining a cable connection structure.

Furthermore, still another object of the present disclosure is to provide an antenna apparatus for a base station, which has a structure in which in-building installation, such as a wall surface and ceiling of an interior (a house), is easy.

Objects of the present disclosure are not limited to the aforementioned object, and the other objects not described above may be evidently understood from the following description by those skilled in the art.

### [Technical Solution]

An antenna apparatus for a base station according to an embodiment of the present disclosure may include a repeater, an antenna module installed on the front of a repeater in a way to be capable of tilting and steering operations, and an antenna clamping unit configured to mediate the installation of the antenna module in the repeater. The antenna clamping unit may conceal a wire cable that electrically connects the repeater and the antenna module.

In this case, the antenna clamping unit may include a fixing part opened in forward and backward directions and fixed to the front of the repeater, and a moving part having a rear end received and coupled to an internal space of the fixing part and a front end subjected to tilting and steering operations in all directions including an up and down direction and a horizontal direction.

Furthermore, the rear end of the moving part may be prevented from being externally detached by the front end of the fixing part.

Furthermore, the antenna clamping unit may further include a moving lock part configured to fix the moving part to the fixing part after the moving part is subjected to the tilting and steering operations.

Furthermore, a gasket groove may be formed within the front end of the fixing part, and a gasket ring configured to form a friction force between the fixing part and the moving part may be interposed in the gasket groove.

Furthermore, the fixing part may be formed in a cylindrical shape that has been opened in the forward and backward directions.

Furthermore, the rear end of the moving part may be received within the fixing part and formed in a semi-sphere shape that has been opened in the forward and backward directions.

Furthermore, the wire cable may be provided in a wire shape longer than a straight line distance between the front end connection point of the repeater and a rear end connection point of the antenna module. A marginal length portion of the wire cable may be received in an internal space of the fixing part.

Furthermore, at least two antenna modules may be installed in one repeater. The antenna clamping unit may be provided in accordance with the number of antenna modules installed in the repeater.

Furthermore, the repeater may be closely attached and installed on an indoor or outdoor wall surface of a building vertically.

Furthermore, the repeater may be closely attached and installed on the bottom of a structure, corresponding to an indoor or outdoor ceiling, horizontally.

Furthermore, the repeater may be buried and installed within ceiling finishing materials of a structure corresponding to an indoor or outdoor ceiling.

Furthermore, the antenna clamping unit may include an extension part vertically disposed in the repeater, at least one fixing part provided at an end of the extension part, and a moving part provided so that the antenna module is coupled to each fixing part, wherein a rear end of the moving part may be received and coupled to an internal space of the fixing part and an external end of the moving part may be subjected to tilting and steering operations in all directions including an up and down direction and a horizontal direction.

Furthermore, the repeater may be buried and installed within ceiling finishing materials of a structure corresponding to an indoor or outdoor ceiling, and may be installed to have a number corresponding to specifications of transmitters and receivers of an antenna module installed in the antenna clamping unit.

Furthermore, when the number of repeaters is two or more, the extension part, fixing part, and moving part of the antenna clamping unit may be provided in accordance with the number of repeaters.

Furthermore, when the number of repeaters is two or more, in the antenna clamping unit, one extension part may be provided, and the fixing part and the moving part may be provided in accordance with the number of repeaters.

Furthermore, when the number of repeaters is two or more, if the repeater is buried and installed within ceiling finishing materials of a structure corresponding to an indoor or outdoor ceiling, the extension part may be fixed to penetrate the inside and outside of the ceiling finishing materials so that the wire cable is concealed and installed.

### [Advantageous Effects]

According to the antenna apparatus for a base station according to an embodiment of the present disclosure, the following various effects can be achieved.

First, there is an effect in that the degradation of the beauty of the antenna apparatus upon in-building installation can be prevented because the wire cable that performs an electrical connection function between the repeater and the antenna module can be prevented from being exposed to the outside through the antenna clamping unit.

Second, there is an effect in that a rise of a space rental cost can be prevented because the repeater can perform tilting and steering operations on the antenna module only in the state in which the repeater has been fixed.

Third, there is an effect in that installation suitability can be improved because the antenna apparatus has a structure for easy in-building installation, such as a wall surface and ceiling of an interior (a house).

### [Description of Drawings]

FIG. 1 is a perspective view illustrating the appearance of an antenna apparatus for a base station according to a conventional technology,
FIG. 2 is a perspective view illustrating the appearance of an antenna apparatus for a base station according to a first embodiment of the present disclosure,
FIG. 3 is an exploded perspective view of FIG. 2,
FIG. 4 is a front view of FIG. 2 and is a cross-sectional view taken along line A-A,
FIG. 5 is a cross-sectional view illustrating some of the components of FIG. 4, which illustrates an antenna clamping unit,
FIG. 6 is a side view of FIG. 2,
FIGS. 7A to 7C are a perspective view, an exploded perspective view, and a side view illustrating embodiments in which the specifications of the repeater, among the components of FIG. 2, are different,
FIGS. 8A to 8D are a perspective view (FIG. 8A), an exploded perspective view (FIG. 8B), a front view (FIG. 8C), and a partial cutaway perspective view (FIG. 8D) illustrating the appearance of an antenna apparatus for a base station, which has been installed on a ceiling surface of a house, according to a second embodiment of the present disclosure,
FIG. 9 is a perspective view illustrating the appearance of an antenna apparatus for a base station, which has been installed on a wall surface of an indoor or outdoor building, according to a third embodiment of the present disclosure,
FIG. 10 is an exploded perspective view of FIG. 9,
FIG. 11 is a modified example of FIGS. 8A to 8D, and is a downward perspective view (a) and upward perspective view (b) of an antenna apparatus for a base station according to a fourth embodiment of the present disclosure,
FIG. 12 is a partial cutaway perspective view of FIG. 11(a),
FIGS. 13A and 13B are other modified examples of FIGS. 8A to 8D, and are a downward partial cutaway perspective view and upward partial cutaway perspective view of an antenna apparatus for a base station according to a fifth embodiment of the present disclosure, and
FIGS. 14 to 16 are a downward perspective view (a) and upward perspective view (b) illustrating a cable connection form of a multi-antenna module for a single antenna clamping unit within a ceiling.

**<Description of reference numerals>**

| | | | |
|---|---|---|---|
| 100: | antenna apparatus for base station | 110: | antenna module |
| 111: | antenna housing | 113: | radome |
| 115: | antenna board | 117: | dipole element |
| 120: | repeater | 121: | installation panel part |
| 123: | housing part | 125: | multiple heat sink pins |
| 127: | installation groove part | 200: | antenna clamping unit |
| 210: | fixing part | 220: | moving part |
| S: | internal space | C: | wire cable |

### [Best Mode]

Hereinafter, embodiments of an antenna apparatus for a base station according to an embodiment of the present disclosure will be described in detail with reference to the accompanying drawings.

In adding reference numerals to the components of each drawing, it should be noted that the same components have the same reference numerals as much as possible even if they are displayed in different drawings. Furthermore, in describing embodiments of the present disclosure, when it is determined that a detailed description of the related well-known configuration or function hinders understanding of an embodiment of the present disclosure, the detailed description thereof will be omitted.

Furthermore, in describing components of an embodiment of the present disclosure, terms, such as a first, a second, A, B, (a), and (b), may be used. Such terms are used only to distinguish one component from another component, and the essence, order, or sequence of a corresponding component is not limited by the terms. All terms used herein, including technical or scientific terms, have the same meanings as those commonly understood by a person having ordinary knowledge in the art to which the present disclosure an embodiment pertains, unless defined otherwise in the specification. Terms, such as those commonly used and defined in dictionaries, should be construed as having the same meanings as those in the context of a related technology, and are not construed as having ideal or excessively formal meanings unless explicitly defined otherwise in the specification.

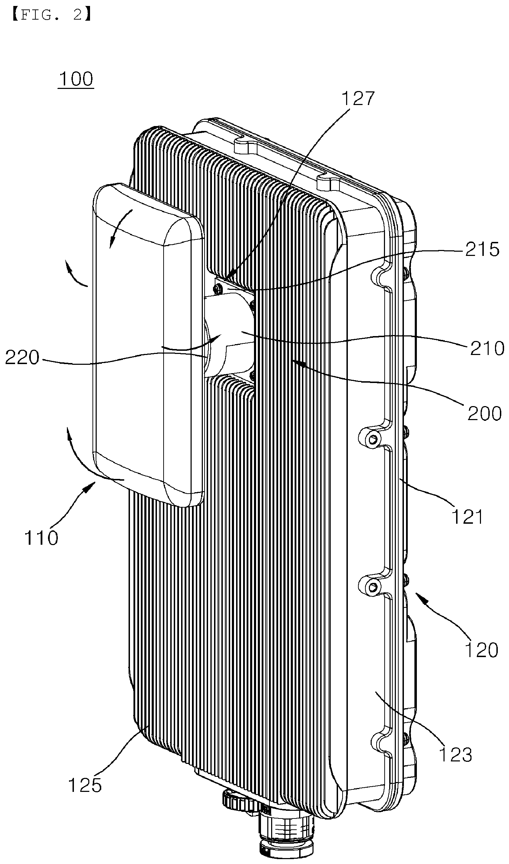

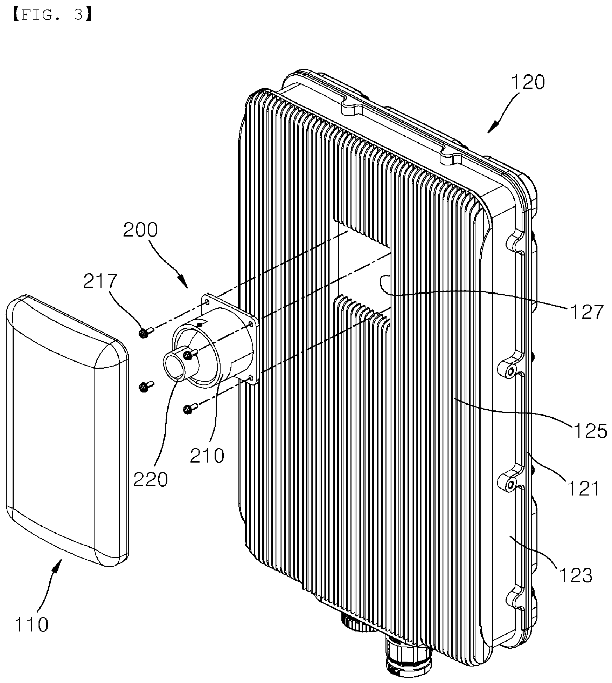

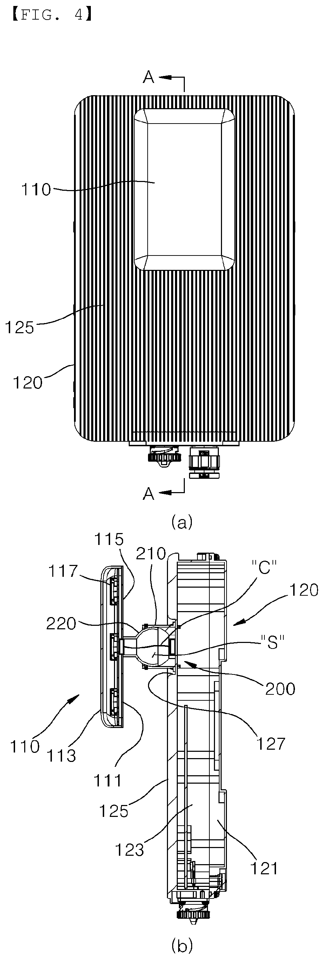

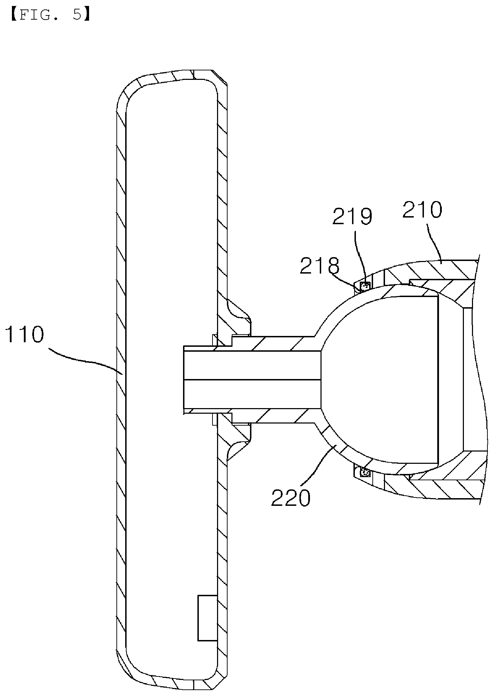

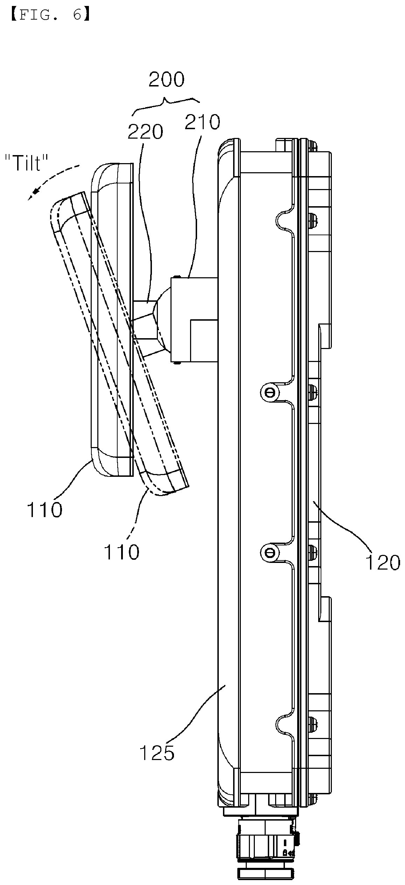

FIG. 2 is a perspective view illustrating the appearance of an antenna apparatus for a base station according to a first embodiment of the present disclosure. FIG. 3 is an exploded perspective view of FIG. 2. FIG. 4 is a front view of FIG. 2 and is a cross-sectional view taken along line A-A. FIG. 5 is a cross-sectional view illustrating some of the components of FIG. 4, which illustrates an antenna clamping unit. FIG. 6 is a side view of FIG. 2.

An antenna apparatus 100 for a base station according to an embodiment of the present disclosure includes a repeater 120 and an antenna module 110 that are installed at a predetermined place, as referred in FIGS. 2 to 6. In this case, the predetermined place at which the antenna apparatus 100 for a base station according to an embodiment of the present disclosure is installed is limited to the indoor or outdoor wall surface or ceiling of a building, and the antenna apparatus may be formed to have a structure in which a shape of at least the repeater 120, among components described later, is suitable for in-building installation.

The antenna module 110 may denote an antenna module having at least one frequency band. Furthermore, the repeater 120 is a remote radio head (RRH), and refers to a transmission/reception apparatus between an antenna and a base station, which is connected to the antenna for each frequency band that is provided to the antenna module 110.

The repeater 120 is a repeater that performs functions for receiving and amplifying or retransmitting a weakened signal between a base station of a mobile communication system and a mobile communication terminal or standardizing a distorted waveform of a signal and adjusting the timing of a signal again, etc.

In the antenna apparatus 100 for a base station according to an embodiment of the present disclosure, in general, although not illustrated in the drawings, the repeater 120 is first mounted on the indoor or outdoor wall surface of a building. The antenna module 110 may be mounted on the front of the repeater 120 in a way to be tiltable and steerable through the medium of an antenna clamping unit 200 described later.

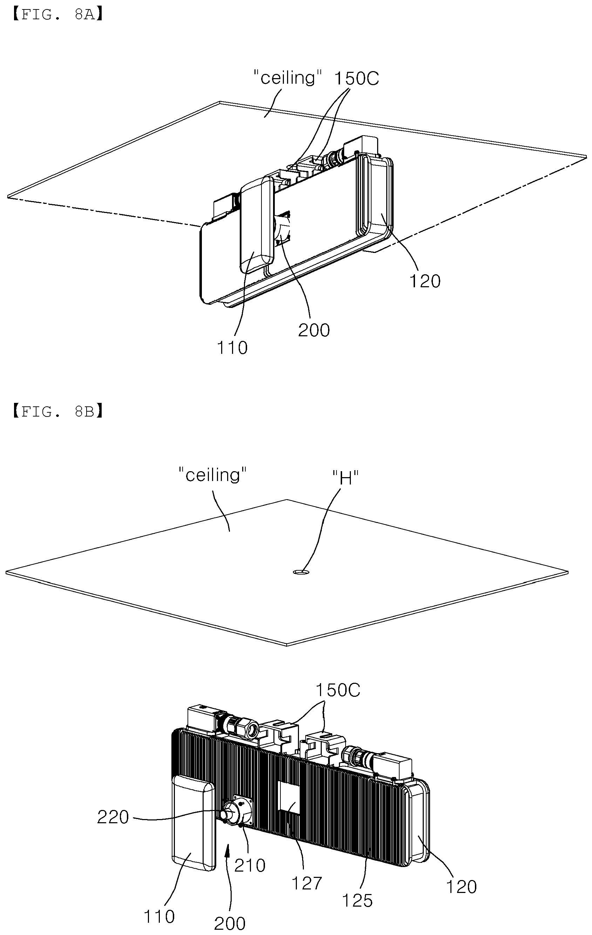

However, an embodiment of the present disclosure does not need to be essentially mounted on the wall surface of an interior as referred in FIGS. 2 to 6, and may be naturally installed on the ceiling of an interior (a house) as referred in FIG. 8A and subsequent drawings. This will be described more specifically later.

As referred in FIG. 4, the antenna module 110 may include an antenna housing 111, and a radome 113 that is provided to cover the front of the antenna housing 111 and that forms a predetermined space between the radome and the antenna housing 111.

An antenna board 115 having a printed circuit board form is installed in the predetermined space of the antenna housing 111. Multiple radiating elements may be mounted and disposed on the front of the antenna board 115. The radiating element that is mounted and disposed in the antenna board 115 may be different depending on the type of antenna. In an embodiment of the present disclosure, however, an example in which a dipole element 117 has been adopted is described. However, the radiating element does not need to be essentially provided as the dipole element, and may be provided as a patch element having a patch type.

Meanwhile, the antenna apparatus 100 for a base station according to an embodiment of the present disclosure may further include the antenna clamping unit 200 that mediates the coupling of the front of the repeater 120 as referred in FIGS. 2 to 6.

More specifically, as referred in FIGS. 2 to 6, the repeater 120 includes an installation panel part 121 that is closely attached and installed on the wall surface of an interior and a housing part 123 that is installed ahead of the installation panel part 121 and that has a predetermined space between the installation panel part and the installation panel part. Various internal components may be installed in the predetermined space.

The internal components that are installed within the repeater 120 may include a main board, two power amplifying units (PAUs), and a power supplying unit (PSU), although not illustrated.

Multiple heat sink pins 125 may be integrally formed on the front of the housing part 123 of the repeater 120. System heat that is generated from the predetermined space may be discharged to the outside through the multiple heat sink pins 125.

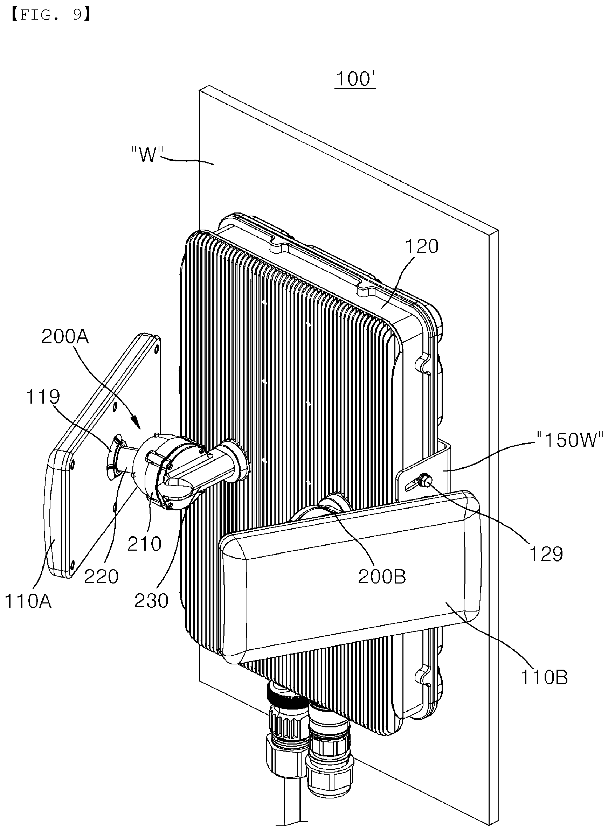

Meanwhile, an installation groove part 127 in which some of the multiple heat sink pins 125 has been deleted in the form of a surface having a quadrangular shape is provided on the front of the housing part 123. The antenna clamping unit 200 may be coupled to the installation groove part 127 by using multiple assembly screws 215. However, the installation groove part 127 that has been deleted in the form of the surface having the quadrangular shape does not need to be essentially provided on the front of the housing part 123 for the installation of the antenna clamping unit 200. As in another embodiment 100' that is referred in FIG. 9 and subsequent drawings described later, the installation groove part 127 may be formed in a shape of a circle that is suitable for a shape of an end corresponding to each connection portion of the antenna clamping unit 200 or in a shape of a coupling stage having any other form.

In this case, the antenna clamping unit 200 may include a fixing part 210 provided in a cylindrical shape that has been opened in forward and backward directions and a moving part 220 having a rear end inserted and installed at an opened front part of the fixing part 210 and having a front end coupled to the antenna module 110.

The rear end of the moving part 220, which is received and installed within the fixing part 210, is formed approximately in the form of a hemisphere having the rear opened, and may be installed to be caught by a front end of the fixing part 210 so that the moving part 220 is not detached toward the outside (in particular, the front).

Furthermore, the moving part 220 has the front and the rear opened and communicates with an internal space of the fixing part 210. A wire cable C that performs an electrical connection between the repeater 120 and the antenna module 110 may be installed in the internal space in which the fixing part 210 and the moving part 220 communicate with each other.

In this case, the wire cable C may be provided in the form of a wire that is longer than a straight line distance between at least a front end connection point of the repeater 120 and a rear end connection point of the antenna module 110 so that tilting and steering operations of the antenna module 110, which are described later, are possible. A marginal length portion of the wire cable C may be received in the internal space of the fixing part 210 in the state in which the twisting of the wire cable has been prevented. Accordingly, the wire cable C is installed to be concealed from the outside. The degradation of the beauty can be prevented.

The moving part 220 may perform tilting and steering operations so that the moving part maintains a predetermined angle to the fixing part 210 in all directions including an up and down direction or a horizontal direction. In this case, the term "tilting operation" is a concept including all operations of the upper part and lower part of the antenna module 110 swinging in forward and backward directions. The term "steering operation" is a concept including all operations of a left end and right end of the antenna module 110 swinging in the horizontal direction.

In the antenna apparatus 100 for a base station according to an embodiment of the present disclosure, the moving part 220 may be provided so that only any one of the tilting operation and steering operation of the antenna module 110 is not performed, but both the tilting operation and the steering operation are performed simultaneously.

More specifically, the front end of the moving part 220 may be subjected to the tilting and steering operations at a predetermined angle in all directions, including the up and down direction or the horizontal direction, centering around an arbitrary reference point of the rear end of the moving part 220, which has been received in the fixing part 210.

As the front end of the moving part 220 is subjected to the tilting and steering operations, the antenna module 110 coupled to the front end is also capable of a tilting operation and a steering operation. The adjustment of the directivity of the antenna module 110 can be performed in a direction that is desired by a designer.

In this case, the tilting and steering operations of the moving part 220 may be performed in the state in which some friction force is present between the moving part 220 and the fixing part 210. To this end, a friction pad (or a friction member) that forms a predetermined friction force between the fixing part 210 and the moving part 220 may be further provided on an internal surface of the fixing part 210 or an external surface of the rear end of the moving part 220.

However, a member for providing the friction force between the moving part 220 and the fixing part 210 is not essentially limited to the friction pad. That is, as referred in FIG. 5, a gasket groove 218 may be formed inside the front end of the fixing part 210 and a gasket ring 219 made of an elastic material (e.g., a rubber material) may be interposed in the gasket groove 218, so that a friction force may be formed between the moving part 220 and the fixing part 210. The gasket ring 219 that is interposed in the gasket groove 218 forms the friction force between the moving part 220 and the fixing part 210. Accordingly, the moving part 220 can be finely adjusted when performing a tilting or steering operation and can also perform a waterproof function for preventing an external alien substance, such as rainwater, from entering the moving part.

Meanwhile, although not illustrated in the drawings, the antenna clamping unit 200 may further include a moving lock part that fixes the moving part 220 to the fixing part 210 at a moving fixing point after the moving part 220 is subjected to tilting and steering operations at a predetermined angle to the fixing part 210.

Any means may be adopted as the moving lock part if the means is a component for fixing the moving part 220 to the fixing part 210. For example, the moving lock part may be implemented by a fixing bolt that interferes with any part of the moving part 220, etc. through the outside of the fixing part 210 in which the rear end of the moving part 220 has been received. In this case, the fixing bolt may be provided as a blunt bolt (a bolt not having a heat part), and may be installed to not protrude to the outside of the fixing part 210.

As described above, according to the antenna apparatus 100 for a base station according to an embodiment of the present disclosure, there are advantages in that by the antenna clamping unit 200, the beauty can be prevented from being degraded by sublating the exposure of the wire cable C that connects the repeater 120 and the antenna module 110 to the outside and space utilization can be maximized because only the antenna module 110 is subjected to tilting and steering operations and tilting and steering operations of the repeater 120 are not performed.

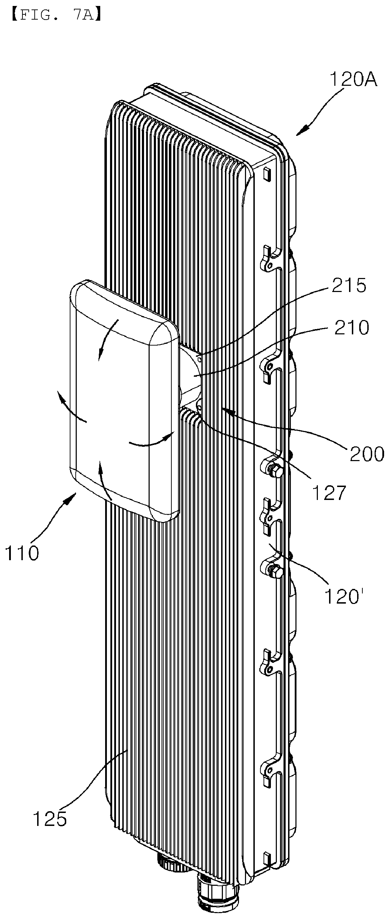

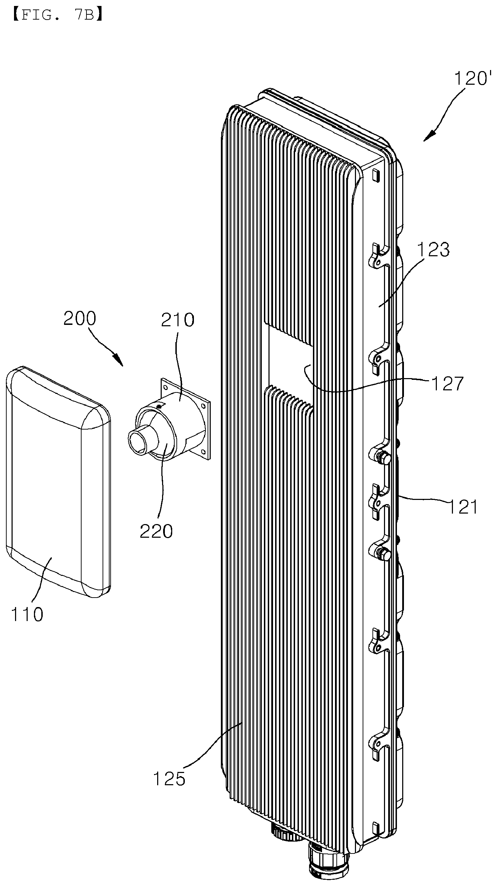

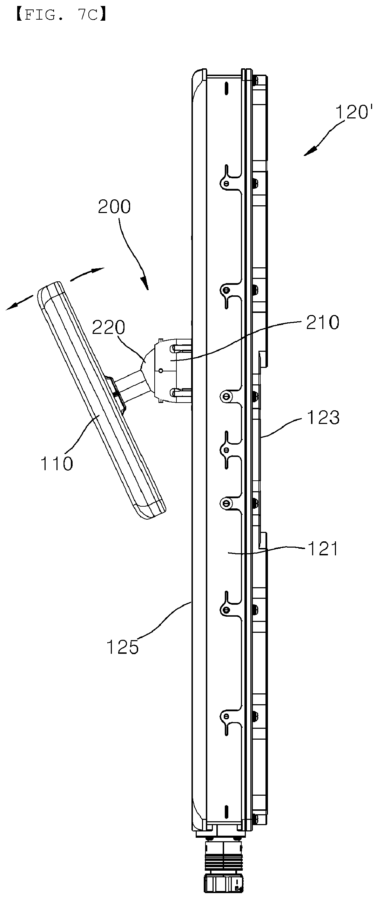

FIGS. 7A to 7C are a perspective view, an exploded perspective view, and a side view illustrating embodiments in which the specifications of the repeater, among the components of FIG. 2, are different.

As referred in FIGS. 7A to 7C, in the antenna apparatus 100 for a base station according to the first embodiment of the present disclosure, the antenna module 110 has the same specifications to which the dipole type (or the patch antenna elements) has been applied in common, but only the specifications of the repeater 120 may be different.

More specifically, compared to the repeater 120 referred in FIGS. 2 to 6, the width of the repeater 120 in the horizontal direction, which has been referred in FIGS. 7A to 7C, may be relatively small, but the length of the repeater 120 in the up and down direction may be provided to have relatively great specifications. In this case, it is preferred that a location where the antenna module 110 is installed is set as a proper location by considering the weight and tilting operation and steering operation of the antenna module 110.

In particular, there can be provided an advantage in that two or more antenna modules 110 are installed up and down in that the length of the repeater 120 in the up and down direction, which has been referred in FIGS. 7A to 7C, is formed to be relatively great.

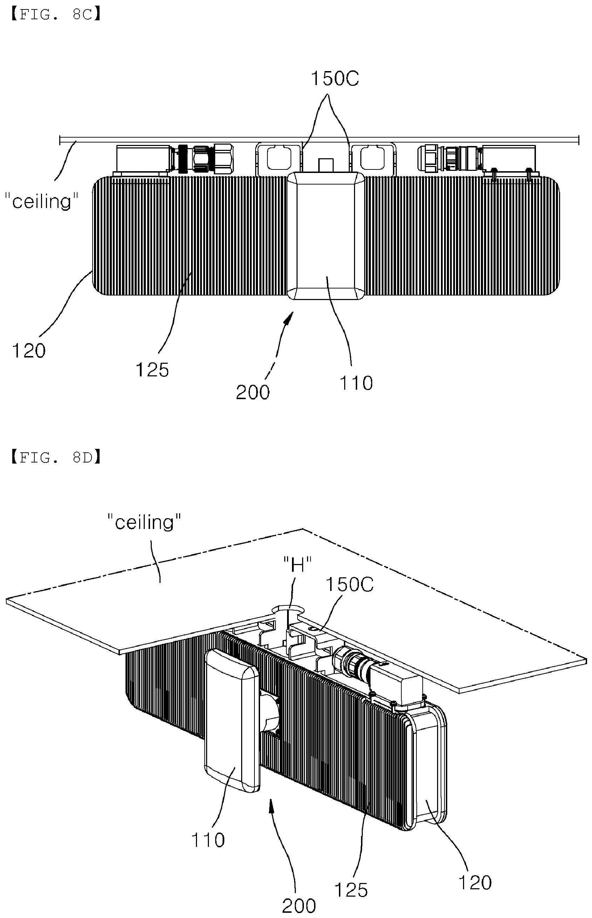

FIGS. 8A to 8D are a perspective view (FIG. 8A), an exploded perspective view (FIG. 8B), a front view (FIG. 8C), and a partial cutaway perspective view (FIG. 8D) illustrating the appearance of an antenna apparatus for a base station, which has been installed on a ceiling surface of a house, according to a second embodiment of the present disclosure.

As referred in FIGS. 8A to 8D, the antenna apparatus 100 for a base station according to the second embodiment of the present disclosure may be installed not only on the wall surface of an interior, such as that referred in FIGS. 2 to 7C, but in a structure (e.g., ceiling finishing materials), such as an indoor or outdoor ceiling surface of a building.

In this case, as referred in FIGS. 8A to 8D, the repeater 120 may be lengthily disposed in a left and right direction (a horizontal direction). After any one of width ends of the repeater 120 is fixed to the bottom of ceiling finishing materials that form a ceiling through the medium of an installation bracket 150C for a ceiling, the antenna module 110 may be installed on the front side of the repeater 120 as described above.

However, the repeater 120 is not essentially limited to be lengthily disposed in the horizontal direction, and the repeater may be lengthily disposed in the up and down direction depending on an embodiment.

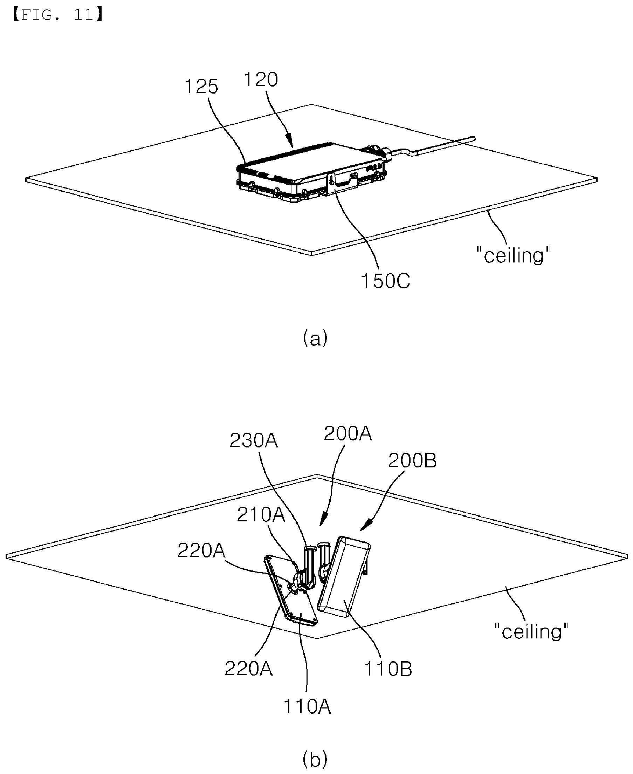

Furthermore, as a fourth embodiment and a fifth embodiment described later, in an embodiment in which the repeater 120 is installed to be buried in the ceiling finishing materials that form the ceiling as referred in FIG. 11 and subsequent drawings, it is said to be natural that a portion corresponding to the installation panel part 121 of the repeater 120 may be closely attached and disposed on an internal surface (a top surface) of the ceiling finishing materials. This will be described more specifically later.

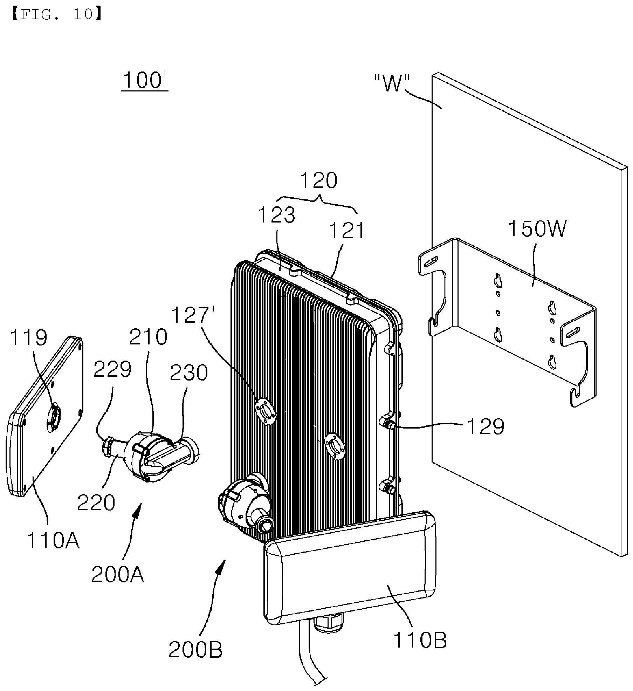

FIG. 9 is a perspective view illustrating the appearance of an antenna apparatus for a base station, which has been installed on a wall surface of an indoor or outdoor building, according to a third embodiment of the present disclosure. FIG. 10 is an exploded perspective view of FIG. 9

The aforementioned antenna apparatus 100 for a base station according to the first embodiment of the present disclosure, which has been referred in FIGS. 2 to 7C, has been implemented as an embodiment in which a single antenna module 110 has been installed in one repeater 120.

However, the present disclosure should not be essentially limited to the embodiment in which only the single antenna module 110 is installed in the one repeater 120 as in the first embodiment of the present disclosure. As referred in FIGS. 9 and 10, it is said to be natural that two or more (i.e., multiple) antenna modules (refer to reference numerals "110A and 110B" in FIGS. 9 and 10) may be installed in one repeater 120.

This means that when the number of repeaters 120 is two or more, the extension part 230, fixing part 210, and moving part 220 of the antenna clamping unit 200 may also be provided in accordance with the number of repeaters 120.

In this case, if the two antenna modules 110A and 110B are installed in one repeater 120, a main board, two power amplifying units (PAUs), and a power supplying unit (PSU) may be provided within the one repeater 120 in a way to correspond to the number of antenna modules so that an independent transmission and reception function is performed by each of the antenna modules 110A and 110B.

Furthermore, likewise, the antenna clamping unit 200 may be provided in accordance with the number of antenna modules 110A and 110B (refer to reference numerals "200A and 200B" in FIGS. 9 and 10). This has a meaning that runs contrary to the fact that the antenna clamping unit 200 is provided in accordance with the number of repeaters 120.

However, in the antenna apparatus 100 for a base station according to the first embodiment of the present disclosure, which has been referred in FIGS. 2 to 7C, the opened rear end of the fixing part 210 is directly installed on the front of the housing part 123 of the repeater 120. In contrast, in the antenna apparatus 100' for a base station according to the third embodiment of the present disclosure, which has been referred in FIGS. 9 and 10, the antenna clamping units 200A and 200B may each further include an extension part 230 at which the fixing part 210 is disposed in parallel to the front of the housing part 123 of the repeater 120 so that the fixing part is spaced apart from the housing part and that is extended and provided to be connected to a repeater-side coupling stage 127' that has been formed at the opened front end of the fixing part 210 on one side thereof and on the front of the housing part 123.

In this case, a fastening stage 229 having a ring shape may be provided at the opened front end of the moving part 220. The fastening stage 229 of the moving part 220 may be firmly fastened to an antenna-side coupling stage 119 that is provided on the rear of each of the antenna modules 110A and 110B by using a fastening screw (not illustrated), etc.

Such a repeater 120 can be easily mounted on an indoor or outdoor wall surface W through the medium of an installation bracket 150W and fastening members 129 that are fastened to the installation bracket, such as multiple bolts.

As described above, the antenna apparatus 100' for a base station according to the third embodiment of the present disclosure can create advantages in that the multiple antenna modules 110A and 110B may be implemented in one repeater 120 so that the directivity of each of the multiple antenna modules is adjusted by implementing beam tilting and steering operations of each of the multiple antenna modules 110A and 110B in a desired direction and the degradation of the beauty of the antenna apparatus can be prevented by sublating the exposure of the wire cable C to a maximum extent while the antenna apparatus is compact.

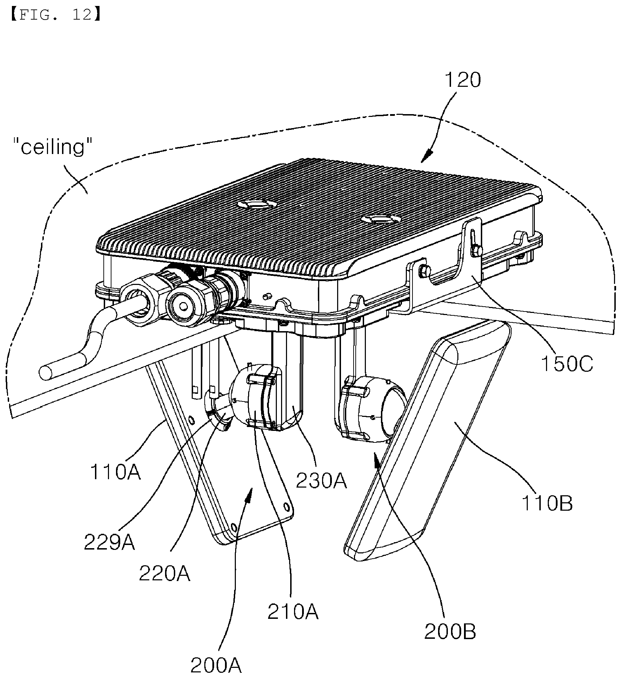

FIG. 11 is a modified example of FIGS. 8A to 8D, and is a downward perspective view (a) and upward perspective view (b) of an antenna apparatus for a base station according to a fourth embodiment of the present disclosure. FIG. 12 is a partial cutaway perspective view of FIG. 11(a)

As in the second embodiment 100 of the present disclosure, which has been referred in FIGS. 8A to 8D, an antenna apparatus 100' for a base station according to the fourth embodiment of the present disclosure may be installed on the ceiling of an interior (house) or in a structure similar to a ceiling even in the case of an outdoor structure, and may have at least the repeater buried and installed within a structure (e.g., ceiling finishing materials) corresponding to a ceiling in order to improve the beauty of appearance.

More specifically, referring to FIGS. 11 and 12, the repeater 120 may be seated and installed through the medium of the installation bracket 150C so that a portion of the repeater 120 corresponding to the installation panel part 121 is closely attached to an internal surface (a top surface) of ceiling finishing materials, that is, a structure corresponding to a ceiling. The multiple antenna modules 110A and 110B may be installed in the installation panel part 121 of the repeater 120 through the extension part 230 of the moving part 220 in order to enable an electrical connection through the wire cable C.

In this case, it is preferred that a penetration part H formed so that a portion corresponding to the extension part 230 of each of the antenna clamping units 200A and 200B penetrates the penetration part in an up and down direction is provided in ceiling finishing materials, that is, a structure corresponding to a ceiling, for the penetration and connection of the wire cable C.

As described above, the antenna apparatus 100' for a base station according to the fourth embodiment of the present disclosure has an advantage in that the degradation of the beauty can be prevented to a maximum extent by prohibiting the exposure of the repeater 120 to the outside in addition to the exposure of the appearance of the wire cable C because at least the repeater 120 is buried and installed within a structure, such as a ceiling. In this case, the antenna modules 110A and 110B are exposed to the outside. In terms of directivity adjustment through a tilting operation and a steering operation, there is no difference from the antenna apparatus 100 for a base station according to the first embodiment and second embodiment of the present disclosure.

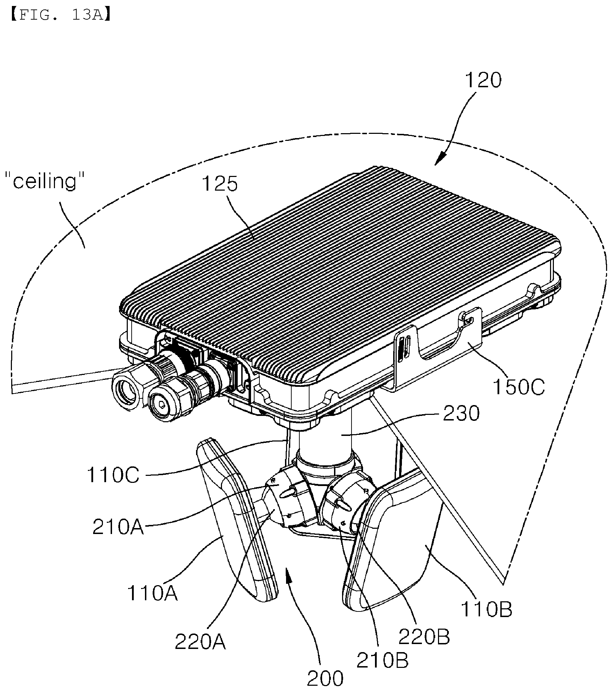

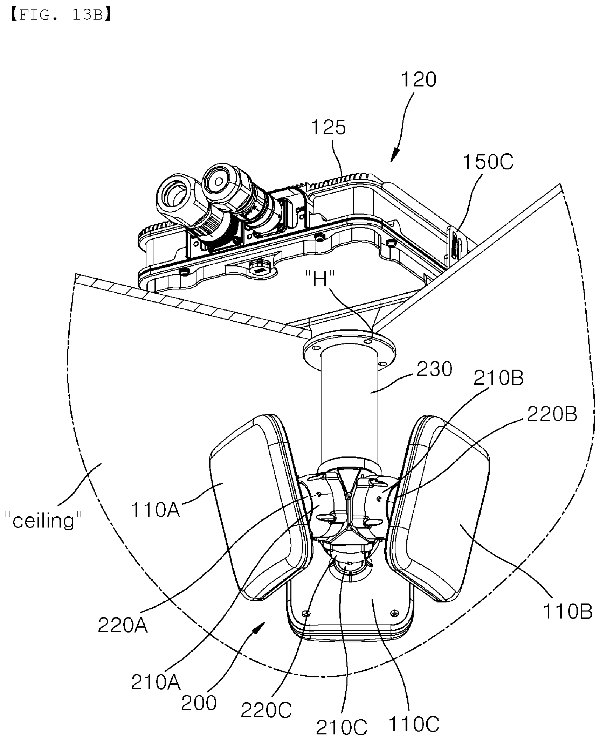

FIGS. 13A and 13B are other modified examples of FIGS. 8A to 8D, and are a downward partial cutaway perspective view and upward partial cutaway perspective view of an antenna apparatus for a base station according to a fifth embodiment of the present disclosure.

The antenna apparatuses 100 and 100' for a base station according to the first to fourth embodiments of the present disclosure have been described on the premise that the antenna modules 110, 110A, and 110B are installed in the antenna clamping units 200, 200A, and 200B, respectively. However, one antenna module 110 does not need to be essentially installed in one antenna clamping unit 200. As referred in FIGS. 13A and 13B, multiple antenna modules 110A to 110C may be installed in one antenna clamping unit 200.

That is, this means that when the number of repeaters 120 is two or more, the number of extension parts 230 is one and the fixing parts 210 and the moving parts 220 may be provided in accordance with the number of repeaters 120 in the antenna clamping unit 200.

More specifically, as referred in FIGS. 13A and 13B, the antenna clamping unit 200 may include a single extension part 230 that is vertically coupled to the installation panel part 121 of the repeater 120 through a ceiling, three fixing parts 210A, 210B, and 210C that are provided to extend from the single extension part 230 and that are provided to have at least two antenna modules (three in the fifth embodiment of the present disclosure, refer to reference numerals 100A to 100C) installed therein, and three moving parts (refer to reference numerals 220A, 220B, and 220C) connected to the three fixing parts 210A, 210B, and 210C, respectively, in a way to be capable of tilting and steering operations.

As described above, the directivity of each of the antenna modules 110A, 110B, and 110C can be adjusted through tilting and steering operations in a desired direction through the three fixing parts 210A, 210B, and 210C and moving parts 220A, 220B, and 220C that are extended and formed with respect to the single extension part 230. There is provided an advantage in that the antenna apparatus for a base station, which is generally compact while preventing the degradation of the beauty, can be installed.

In this case, it may be said to be natural that an upper part of the single extension part 230 may be directly coupled to one surface of the repeater 120 through the penetration part H formed in the ceiling finishing materials that constitutes the ceiling.

More specifically, if the number of repeaters 120 is two or more, when the repeaters are buried and installed within ceiling finishing materials of a structure corresponding to an indoor or outdoor ceiling, the extension part 230 may be fixed to penetrate the inside and outside of the ceiling finishing materials so that the wire cable C is concealed and installed.

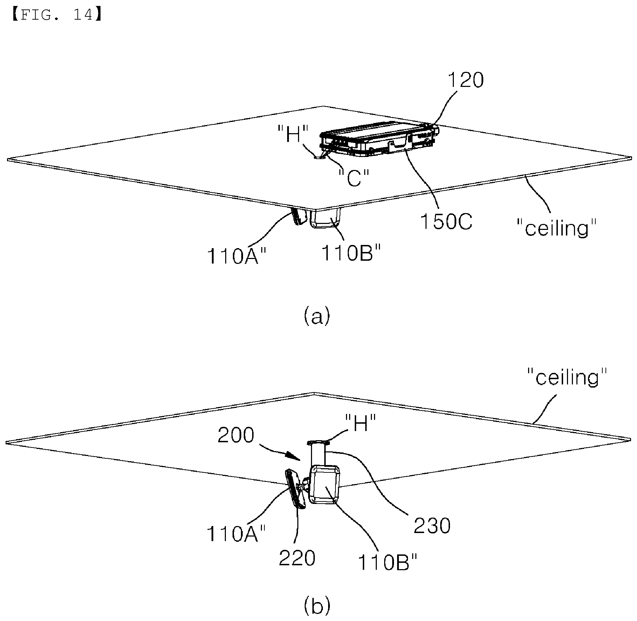

FIGS. 14 to 16 are a downward perspective view (a) and upward perspective view (b) illustrating a cable connection form of a multi-antenna module for a single antenna clamping unit within a ceiling.

In embodiments of the antenna apparatus for a base station according to the present disclosure, multiple antenna modules 110A" to 110C" may be installed in one antenna clamping unit 200. In this case, if each of the antenna modules 110A" to 110C" has 4T4R specifications so that four transmitters (4T) and four receivers (4R) function in each antenna substrate (not illustrated), the repeater 120 having a number corresponding to the specifications of the antenna modules 110A" to 110C" is required.

For example, as referred in FIG. 14, if the specifications of the repeater 120 have been adopted for 8T8R, two repeaters are not essentially required. If two antenna modules 110A" and 110B" each having 4T4R specifications are installed at the bottom of a ceiling, it may be said to be natural that only one repeater 120 for 8T8R may be installed within a ceiling.

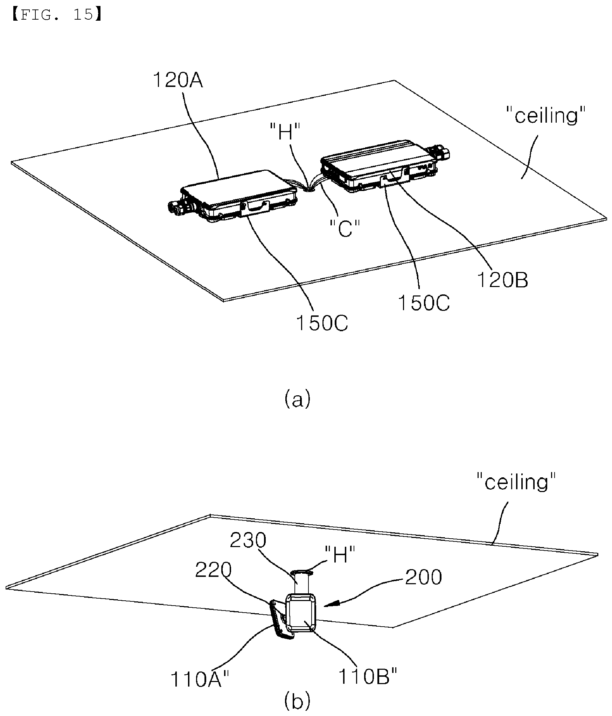

Furthermore, as referred in FIG. 15, three antenna modules 110A", 110B", and 110C" do not need to be essentially installed in one antenna clamping unit 200, and only two antenna modules 110A" and 110B" may be installed. In this case, if the specifications of the antenna modules 110A" and 110B" each have 4T4R, two repeaters 120 (refer to reference numerals 120A and 120B) for 4T4R, which correspond to the same specifications, may be installed within a ceiling.

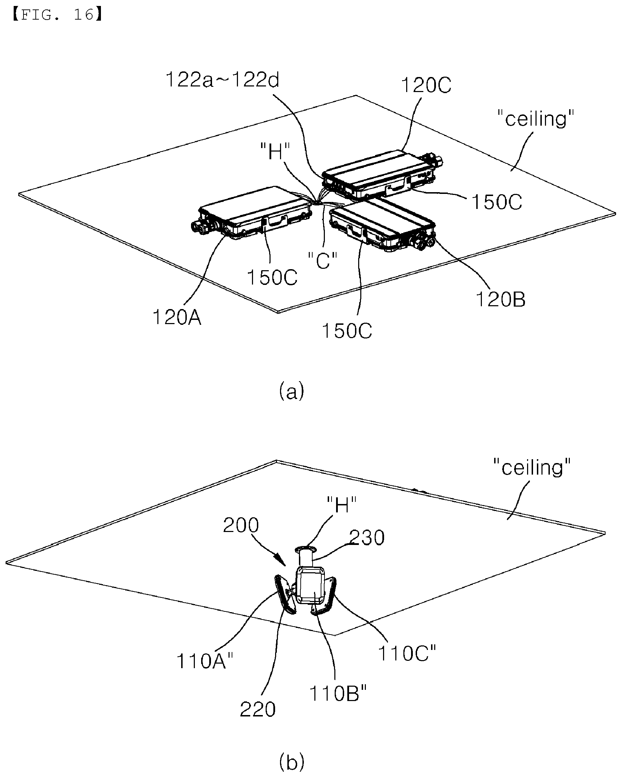

Furthermore, as referred in FIG. 16, as a case in which three antenna modules 110A", 110B", and 110C" have been installed in one antenna clamping unit 200 so that the three antenna modules are exposed to the bottom of a ceiling, if each of the antenna modules has the 4T4R specifications, three repeaters 120A, 120B, and 120C corresponding to the 4T4R specifications may be installed within the ceiling.

In this case, connecting terminals 122a to 122d to which the wire cables C each corresponding to each of the transmitters and each of the receivers (4T4R) are connected may be provided at the end of each of the three repeaters 120A, 120B, and 120C in a length direction thereof. The four wire cables C which are connected to the connecting terminals 122a to 122d, respectively, may be connected in a bundle unit, and may be electrically connected to each of the antenna modules 110A", 110B", and 110C" through the penetration part H that has been formed to penetrate the ceiling up and down in the state in which each wire cable has been concealed against the outside through the extension part 230 of the antenna clamping unit 200.

Such an installation characteristic of the wire cable C may be likewise applied to the cases of FIGS. 14 and 15.

As described above, the directivities of the antenna modules 110A" to 110C" can be adjusted in a desired direction through tilting and steering operations of two or more (preferably, three or more) moving parts 220 that have been coupled to a single extension part 230 and a single fixing part 210. There is provided an advantage in that the antenna apparatus for a base station, which is generally compact while preventing the degradation of the beauty, can be installed.

The antenna apparatus for a base station according to an embodiment of the present disclosure has been described in detail with reference to the accompanying drawings. However, an embodiment of the present disclosure is not essentially limited to the aforementioned embodiment, and may include various modifications and implementations within an equivalent range thereof by a person having ordinary knowledge in the art to which the present disclosure pertains. Accordingly, the true range of a right of the present disclosure will be said to be defined by the appended claims.

### [Industrial Applicability]

The present disclosure provides the antenna apparatus for a base station, which has a structure that prevents the exposure of the appearance of a cable, enables the tilting of the antenna module solely even without a tilting operation of the repeater, and facilitates in-building installation, such as a wall surface and ceiling of an interior (a house), etc. while having an electrical connection structure using the cable not a socket pin connection structure.

## Claims

1. An antenna apparatus for a base station, comprising:
a repeater;
an antenna module installed on a front of a repeater in a way to be capable of tilting and steering operations; and
an antenna clamping unit configured to mediate the installation of the antenna module in the repeater,
wherein the antenna clamping unit conceals a wire cable that electrically connects the repeater and the antenna module.

2. The antenna apparatus of claim 1, wherein the antenna clamping unit comprises:
a fixing part opened in forward and backward directions and fixed to the front of the repeater; and
a moving part having a rear end received and coupled to an internal space of the fixing part and a front end subjected to tilting and steering operations in all directions comprising an up and down direction and a horizontal direction.

3. The antenna apparatus of claim 2, wherein the rear end of the moving part is prevented from being externally detached by a front end of the fixing part.

4. The antenna apparatus of claim 2, wherein the antenna clamping unit further comprises a moving lock part configured to fix the moving part to the fixing part after the moving part is subjected to the tilting and steering operations.

5. The antenna apparatus of claim 2, wherein:
a gasket groove is formed within the front end of the fixing part, and
a gasket ring configured to form a friction force between the fixing part and the moving part is interposed in the gasket groove.

6. The antenna apparatus of claim 2, wherein the fixing part is formed in a cylindrical shape that has been opened in the forward and backward directions.

7. The antenna apparatus of claim 2, wherein the rear end of the moving part is received within the fixing part and formed in a semi-sphere shape that has been opened in the forward and backward directions.

8. The antenna apparatus of claim 1, wherein:
the wire cable is provided in a wire shape longer than a straight line distance between a front end connection point of the repeater and a rear end connection point of the antenna module, and
a marginal length portion of the wire cable is received in an internal space of the fixing part.

9. The antenna apparatus of claim 1, wherein:
at least two antenna modules are able to be installed in one repeater, and
the antenna clamping unit is provided in accordance with a number of antenna modules installed in the repeater.

10. The antenna apparatus of claim 1, wherein the repeater is closely attached and installed on an indoor or outdoor wall surface of a building vertically.

11. The antenna apparatus of claim 1, wherein the repeater is closely attached and installed on a bottom of a structure, corresponding to an indoor or outdoor ceiling, horizontally.

12. The antenna apparatus of claim 1, wherein the repeater is buried and installed within ceiling finishing materials of a structure corresponding to an indoor or outdoor ceiling.

13. The antenna apparatus of claim 1, wherein the antenna clamping unit comprises:
an extension part vertically disposed in the repeater;
at least one fixing part provided at an end of the extension part; and
a moving part provided so that the antenna module is coupled to each fixing part, wherein a rear end of the moving part is received and coupled to an internal space of the fixing part and an external end of the moving part is subjected to tilting and steering operations in all directions comprising an up and down direction and a horizontal direction.

14. The antenna apparatus of claim 13, wherein the repeater is buried and installed within ceiling finishing materials of a structure corresponding to an indoor or outdoor ceiling, and is installed to have a number corresponding to specifications of transmitters and receivers of the antenna module installed in the antenna clamping unit.

15. The antenna apparatus of claim 13, wherein when a number of repeaters is two or more, the extension part, fixing part, and moving part of the antenna clamping unit are provided in accordance with the number of repeaters.

16. The antenna apparatus of claim 13, wherein when a number of repeaters is two or more, in the antenna clamping unit, one extension part is provided, and the fixing part and the moving part are provided in accordance with the number of repeaters.

17. The antenna apparatus of claim 15 or 16, wherein when the number of repeaters is two or more, if the repeater is buried and installed within ceiling finishing materials of a structure corresponding to an indoor or outdoor ceiling, the extension part is fixed to penetrate an inside and outside of the ceiling finishing materials so that the wire cable is concealed and installed.
